# EUROPEAN PATENT APPLICATION

(11) **EP 4 572 279 A1**
(43) Date of publication of application: **18.06.2025**
(21) Application number: 23383305.2
(22) Date of filing: 15.12.2023
(51) Int. Cl.: H04L 41/0631, G06N 5/045, H04L 41/5009, H04L 41/5025, H04L 43/067, H04L 41/16, H04L 43/08, H04L 41/22, H04L 41/0681

(54) **NETWORK ANOMALY MITIGATION BASED ON A LARGE LANGUAGE MODEL**

(71) Applicant: Samsung Zhilabs, Slu, 08029 Barcelona (ES)
(72) Inventor: Izquierdo Franco, Marta, 28924 Madrid (ES); Xue, Zhouyang, 28924 Madrid (ES); Gallego Castellanos, Adrián, 28924 Madrid (ES); Juanes Suárez, Ramón, 28924 Madrid (ES); Martínez García, Patricio José, 28924 Madrid (ES); Arpírez Vega, Julio César, 28924 Madrid (ES)
(74) Representative: Grünecker Patent- und Rechtsanwälte PartG mbB

(57) **Abstract**

A computer-implemented method for managing a telecommunications network based on a large language model is disclosed, the large language model being fine-tuned with technical documentation for the telecommunications network and historical data originating from the telecommunications network. The method comprises receiving one or more key-performance indicators and determining whether the one or more key-performance indicators indicate an anomaly. The method further comprises, in response to detecting an anomaly, determining contextual data associated with the real-time data and feeding a prompt to identify a root cause to the large language model, the prompt containing the contextual data and a task description for root cause analysis for the anomaly. The method also comprises performing one or more responses to address the root cause.

## Description

### TECHNICAL FIELD

This disclosure relates to systems and methods for anomaly mitigation in telecommunications networks based on artificial intelligence approaches, in particular, based on large language models.

### BACKGROUND

Access to reliable telecommunications today is vital to all branches of society. With continuing digitization of life and work, and in view of autonomous internet access of diverse equipment, telecommunications networks become more complex and potential sources for network disruption increase. Hence, solving problems of degradation in service quality has become a crucial objective for telecommunications service providers. Major reasons for network downtime include faults and errors in network devices, device configuration changes, operational human errors, and mismanagement of devices. Further, link failures may be caused by physical fiber cable cuts, by network congestion, or security attacks. In addition, network behavior is affected by mishaps such as natural disasters and user behavior changes.

Conventional tools for supporting administrators of a telecommunications network in detecting potential disruptions mostly rely on statistical models or are rule-based. Such approaches, however, struggle to adapt to the dynamic and constantly evolving nature of modern telecommunications networks and fall short of offering fast and automated solutions to problems. In addition, automatic resolution of networking problems hinges on contextual understanding which is out of reach for network management tools of the prior art.

Recently, anomaly detection approaches based on deep learning have been proposed. However, existing deep learning approaches cannot provide insight in the decision-making process, so that administrators of a telecommunications network are left with struggling whether they can trust in the generated predictions, instead of being provided with information allowing them to react quickly to a disruption in the network.

### SUMMARY

The present disclosure provides a method for managing a telecommunications network. The method leverages a large language model for root cause analysis in telecommunications networks. The method comprises monitoring real-time data associated with the telecommunications network. Monitoring the real-time data comprises receiving one or more key-performance indicators or determining one or more key-performance indicators from the real-time data and determining, by an anomaly detector, whether the one or more key-performance indicators indicate an anomaly. In response to detecting the anomaly, contextual data associated with the real-time data are determined by a root cause analysis engine.

The root cause analysis engine feeds a prompt to identify a root cause to a large language model, the prompt to identify the root cause containing the contextual data and a task description for root cause analysis for the anomaly. The large language model has been fine-tuned with technical documentation for the telecommunications network (including manuals, troubleshooting guides and support tickets) and historical data originating from the telecommunications network. By an action engine, one or more responses to address the root cause are then performed. The fine-tuning of the large language model enhances anomaly detection by improving contextual understanding and pattern recognition. This training enhances system efficiency by recognizing complex patterns in infrastructure data. This fine-tuning also aids in root cause identification, providing faster resolution and more effective troubleshooting.

The disclosed approach hence accomplishes two key goals: enabling correct identification of network anomalies and quickly pinpointing the underlying core reasons behind these. The proposed approach can provide immediate context of error conditions while also respecting data privacy and data security. The superior capability of large language models for zero-shot performance entails that the claimed solution can adapt to situations in today's complex telecommunication landscape. Further, the real-time adaptability of the disclosed solution aligns with autonomous and data-driven management which will be required as the telecommunications industry evolves towards efficient, reliable, and high-performance networks.

According to an embodiment, the technical documentation comprises at least one of administration guides, troubleshooting guides, closed support tickets, and configuration files. The historical data may comprise historical log data, network manager change logs, historical performance metrics, and baseline profiles. The real-time data can comprise at least one of real-time logs, event streams, telemetry data, infrastructure data, application metrics, social media, public data, and environmental data.

According to another embodiment, the prompt to identify the root cause is a second prompt, wherein the task description for root cause analysis for the anomaly is a second task description. Further, the monitoring the real-time data may further comprise feeding a first prompt to the large language model, the first prompt comprising textual output of the anomaly detector, the real time data, and a first task description to verify the anomaly.

According to an aspect, the contextual data is based on the key-performance indicators, textual output of the anomaly detector, output generated by the large language model in response to the prompt to identify a root cause, and current network configuration data of the telecommunications network.

The performing the one or more responses by the action engine may comprise providing an alert on the identified root cause to a user, or displaying, on a graphical user interface of a computer one or more actions to be performed on the telecommunications network, the one or more actions being selected based on the identified root cause. The one or more actions may also be automatically performed on the telecommunications network.

According to another aspect, the method further comprises generating one or more actions by feeding a third prompt to the large language model, the third prompt comprising a third task description to suggest actions to resolve the root cause.

According to yet other embodiments, the determining the contextual data is based on auxiliary reasoning models, wherein the auxiliary reasoning models comprise at least one of a Bayesian reasoning model, a Markov chain model, and a fuzzy logic model. According to another aspect, the method further comprises feeding a fourth prompt to the large language model, the fourth prompt comprising a fourth task description to verify that the detected anomaly has been resolved.

In addition, a computer-readable medium is disclosed, the computer-readable medium comprising instructions that, when executed by a processing unit, cause the processing unit to perform one of the above methods. The present disclosure also provides a computing system, the computing system comprising a processing unit and a memory unit connected to the processing unit, the memory unit comprising instructions that, when executed by the processing unit, cause the processing unit to perform one of the above methods.

### BRIEF DESCRIPTION OF THE FIGURES

Exemplary embodiments of the invention are explained in more detail below with reference to the accompanying figures, in which
**Figure 1** illustrates data employed for fine-tuning of a large language model for anomaly mitigation in a telecommunications network;
**Figure 2** illustrates real-time data employed as input to a system for anomaly mitigation in a telecommunications network;
**Figure 3** illustrates employing a fine-tuned large language model in a system for anomaly mitigation in a telecommunications network;
**Figure 4** illustrates a flowchart of a method for applying a fine-tuned large language model for anomaly mitigation in a telecommunications network; and
**Figure 5** shows a block diagram of a computing device configured for employing a large language model for anomaly mitigation in a telecommunications network.

### DETAILED DESCRIPTION

Described herein are systems and techniques for managing a telecommunications network, in particular regarding anomaly detection and resolution. In the present disclosure, the capabilities of large language models (LLMs) are leveraged for real-time root cause diagnosis in telecommunications networks. The disclosure also proposes to employ LLMs to provide various strategies to resolve the anomaly.

For purposes of explanation, numerous examples and specific details are set forth in order to provide a thorough understanding of the embodiments of the present invention. Embodiments as defined by the claims may include some or all of the features in these examples alone or in combination with other features described below, and may further include modifications and equivalents of the features and concepts described herein.

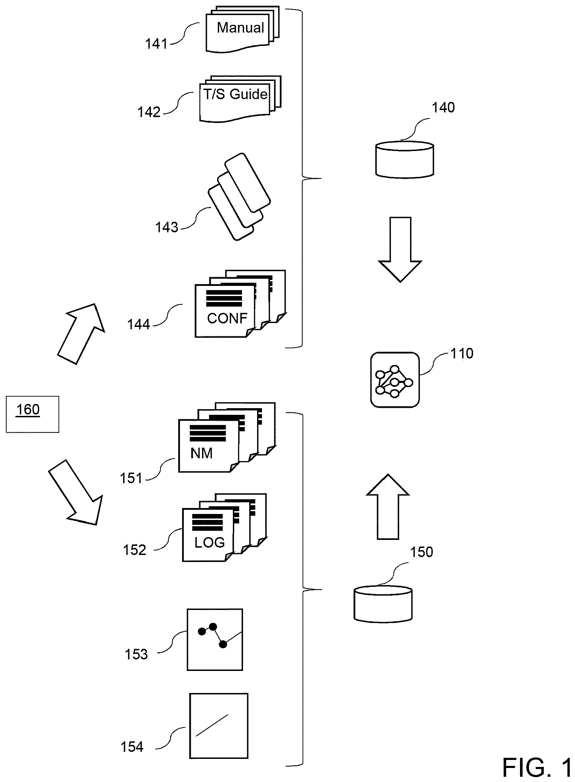

**Figure 1** illustrates fine-tuning of LLM 110 for the task of anomaly mitigation in a telecommunication network 160. LLM 110 is fine-tuned with training data 140, 150 associated with or originating from telecommunications network 160 under consideration. Specifically, the training data comprise technical documentation 140 and historical data 150 of the telecommunications network 160. The telecommunications network 160 may comprise an IP network and/or a radio access network.

LLM 110 may be based on GPT, on other transformer-inspired neural language models such as LaMDA or PaLM, or on a different large language model architecture. Particularly, recent LLMs have shown a surprising understanding of contextual complexities in large sets of unstructured data. Such LLMs have typically been trained on billions of tokens from common web crawl, books, and the Wikipedia. The LLM can be accessed via a web interface or via a dedicated API. Fine-tuning according to Figure 1 is a further training step that adapts the LLM with knowledge on the specific telecommunications network 160.

One the one hand, LLM 110 is fine-tuned with technical documentation 140 on the telecommunications network 160, which may comprise technical manuals and network specifications 141 that describe the workings of the telecommunications network 160. The technical documentation 140 makes the LLM familiar with the implementation of the telecommunications network 160. The technical documentation 140 may also comprise troubleshooting guides 142 which contain detailed action plans to resolve a wide range of technical issues in the telecommunications network 160. From these, LLM 110 is primed to consider diverse strategies to resolve encountered network issues. The technical documentation 140 may also comprise resolved support tickets 143 associated with the telecommunications network 160. Resolved support tickets 143 may describe problems encountered by operators of the telecommunications network 160 along with actions taken for resolving the issue. In addition, customer information can also be harvested by tracking service-related data. Accordingly, resolved support tickets 143 may also originate from subscriber touch points with a business support system. Such support tickets describe problems encountered by users of the network at specific geographic locations along with actions taken to resolve the problems. The technical documentation 140 may also comprise configuration files 144 for elements of the telecommunications network 160 across all layers of the network - data plane, control plane, management plane, and radio access network. Configuration files 144 may relate to management information of networking devices used to configure, monitor, and manage the layers of the network stack. The configuration files 144 may also relate to settings such as routing tables and forwarding information computed in the control plane of the telecommunications network 160.

On the other hand, LLM 110 is fine-tuned with historical data 150 of telecommunications network 160. Particularly, historical data 150 may comprise change records 151 of the network manager, which informs the LLM on changes in the network architecture. Historical data 150 may further comprise historical logs 152 comprising time series of events at successive time intervals. The temporal order and the dependency of data points on previous events make historical logs 152 suitable for trend analysis and forecasting. By correlating historical logs 152 with recorded events, the LLM may be trained to infer the effect of particular events or actions on the telecommunications network 160. Historical data 150 may also comprise performance metrics 153 and baseline profiles 154. Performance metrics 153 may, for example, include download/upload speed, bandwidth usage, latency, or packet loss experiences at network nodes. Performance metrics 153 may also include round trip times, packet delay variation, jitters, mean opinion scores during VoIP, application response times, packet loss packet loss rates, burst packet losses, out-of-order packets, or retransmission rates. Baseline profiles 154 refer to the typical values of key performance indicators in the network during prolonged time periods (e.g. a week). The baseline profiles may form the base on which presence of an anomaly is inferred.

By virtue of considering the various data 141-144 and 151-154, LLM 110 is primed to correlate technical data arising from the telecommunications network 160 with technical documentation, so that it is well equipped for providing analysis and resolution of anomaly conditions in the specific telecommunications network 160.

According to embodiments, fine-tuning according to Figure 1 may be based on the API of ChatGPT, which defines messages allowing defining various roles for messages. The user role indicates the submitted content as originating from the user himself. The system role is used create a context or scope of the conversation by assigning a specific behavior to the assistant. The assistant role indicates that the message was a previous response from GPT. The assistant role is hence useful to maintain continuity of the conversation with the LLM.

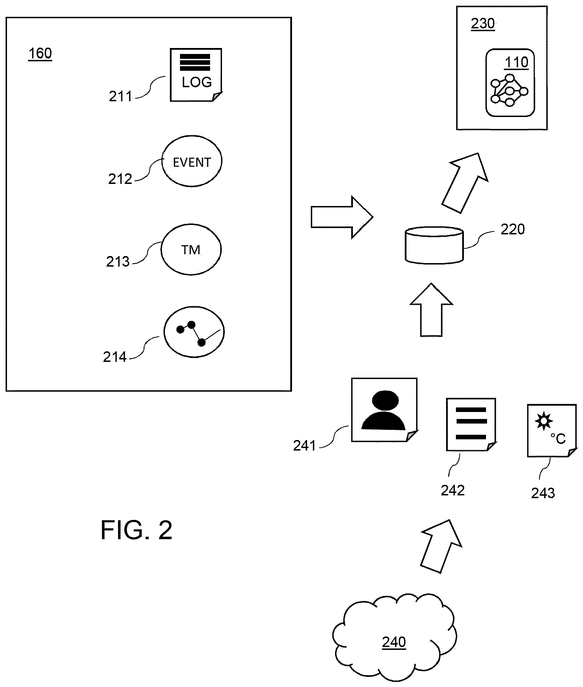

**Figure 2** illustrates real-time data being provided to system 230 for network anomaly detection and resolution. System 230 is configured to perform continuous data ingestion from various real-time network sources. Specifically, the system is provided with real-time data 220 from within telecommunications network 160 and from the internet 240. System 230 includes LLM 110 fine-tuned as explained above with reference to Figure 1.

The real-time data from within telecommunications network 160 include real-time logs 211 arising from network elements and streams of events 212 from all over the telecommunications network 160. In addition, the real-time data may comprise telemetry data 213 acquired by network telemetry functionality. Telemetry data 213 comprises information extracted from the network via active or passive measurements. The real-time data may further comprise application metrics 214, e.g. quality metrics reported by VoIP applications, metrics for streaming video performance, or HTTP error percentages. The real-time data 211-214 provide a current context for the system 200 to detect and resolve anomalies in the telecommunications network 160.

Additionally, internet 240 is another source for real-time data provided to the system 230. The real-time data provided from the internet may comprise content 241 from a social media source and content 242 from a public data source. The real-time data provided from the internet 240 may also comprise environmental data 243. Considering real-time data 241-243 from the internet allows the system 230 to consider a full context for detecting and resolving anomalies. In particular, network data as indicated by 211-214 can be correlated with situations that potentially affect user interaction with telecommunications networks in general. For example, events such as a World Cup football game may causes extraordinary spikes in network volume over a whole country, so that a drop in network performance is less likely to indicate a technical anomaly.

Real-time data 211-214 and 241-243 can be collected in a time window of a predetermined size to be provided to the LLM within a prompt.

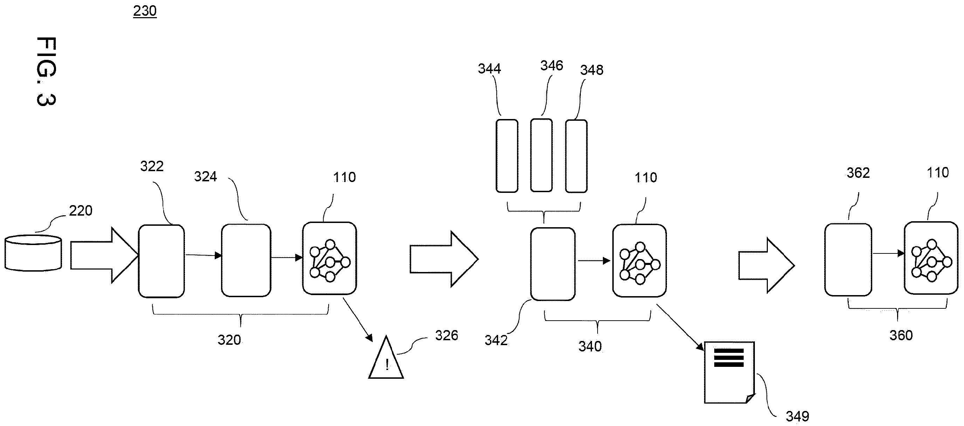

**Figure 3** illustrates system 230 for network anomaly mitigation in detail. System 230 comprises an anomaly detection engine 320, a root cause analysis engine 340, and an action engine 360. In every stage, LLM 110 fine-tuned as explained above with reference to Fig. 1 may be applied for the specific task, i.e. anomaly detection, root cause analysis, and action proposal.

Anomaly detection engine 320 receives key performance indicators. The key performance indicators may include any of the typical key performance indicators in network performance analysis along with corresponding time series. LLM 110 may identify patterns and trends within the incoming data. Moreover, data related to alarm thresholds and configuration may be extracted, so as to obtain expected behavior and patterns for the key performance indicators. In detail, anomaly detection engine 320 comprises analysis module 322, which is configured to receive real-time data 220 as explained above with reference to Figure 2. Analysis module 322 is configured to process the incoming real-time data 220 to extract key performance indicators. Anomaly detection engine 320 further includes anomaly detector 324 fed with the processed data to identify an anomaly. Anomaly detector 324 may be based on an prior art approach such as a statistical algorithm, a density-based approach, a cluster-based approach, a Bayesian network, a hidden Markov network, or a support vector machine.

Anomaly detector 324 may directly raise anomaly 326. Further, anomaly detector 324 may generate textual output containing details on the anomaly 326, e.g. in which data the anomaly is detected or which data point specifically indicates a deviation pointing to the anomaly. The textual output may also contain a measure of a significance of the deviation.

According to specific embodiments, the output of anomaly detector 324 may be employed to assemble a prompt for the LLM. The prompt may include the textual output on the detected anomaly. LLM 110 is also provided with the output of analysis module 322 as context. Recent LLM 110 support a reasonable large number of tokens as input so that a full context of the current conditions in telecommunications network 160 can be represented. In the prompt, LLM 110 is then asked for confirmation of the detected anomaly and inquired whether it is able to detect further anomalies. LLM 110, being fine-tuned as described above, is able to obtain expected behavior and patterns for the key performance indicators. Hence, from trained knowledge and real-time data, system 230 may receive main key performance indicators and their corresponding time series. In addition, data related to alarm thresholds and configurations are extracted, so that expected behavior and patterns of the key performance indicators are obtained.

Many network failures are the effect of a sequence of chained events. Conventional tools however consider only a low number of event to determine presence of an anomaly. Representing the current network behavior in the context to LLM 110 enables the LLM to capture such sequence of chained events. Moreover, anomaly detector 324 is configured to detect a wide range of anomalies, but its capability to consider contextual intricacies of the anomalies is limited. The LLM in contrast, is particularly strong in incorporating environmental and contextual information. Combining anomaly detector 324 with fine-tuned LLM 110 hence allows a significant boost in anomaly detection capabilities. Further, by providing a wealth of data to anomaly detection engine 320, the system is enabled to proactively identify anomalies i.e. capture a sequence of events that could lead to network malfunctioning even before said malfunctioning has materialized.

In addition, anomaly detection engine 320 may employ typical anomaly detection techniques (e.g. z-score) to assess whether the anomalies are likely to be real or not. Anomaly detection engine 320 can also use knowledge in the training data to check if this kind of anomaly happened previously and is documented.

Anomaly detection engine 320 is configured to generate alarm 326 when an anomaly in the analyzed data are identified e.g. by anomaly detector 324, and, optionally, as verified by LLM 110. Immediately in response to the alarm 326, root cause analysis engine 340 is triggered. Root cause analysis engine 340 implements a procedure to identify a root cause issue causing the anomaly. Root cause analysis engine 340 includes contextual data processing block 342, which receives key performance indicators, characteristics of the anomaly as identified by the anomaly detector 324, and current configuration settings of the telecommunications network 160 to generate contextual data. Based on the received data, contextual data processing block 342 may assemble a prompt and provide the prompt to the LLM. The prompt provides the contextual data to the LLM and includes a task description instructing LLM 110 to explain a root cause of the identified anomaly. In embodiments, the task description instructs LLM 10 to generate step-by-step reasoning to pinpoint the root cause of the identified anomaly.

LLM 110 may then generate root cause analysis report 349 in natural language. LLM 110 may also be asked to assess a severity of the detected anomaly. How to best prompt the LLM, i.e. how to best formulate questions for the LLM, has become a widely explored topic. According to best practice, the LLM is provided with a task description and a context in which a question should be answered, along with the question itself. Generally, a prompt to the LLM may be constructed as <task description> \n <format statement> \n <contextual data>.

According to embodiments, root cause analysis engine 340 may include auxiliary models 344, 346, 348 to generate context for LLM 110. For example, auxiliary reasoning model 344 may be based on Bayesian inference that proceeds by analyzing dependencies in correlations between different data. The auxiliary reasoning model 344 may provide a-priori and a-posteriori probabilities. Additionally or alternatively, auxiliary reasoning model 346 may be provided which implements a Markov chain that provides additional probabilities. Additionally or alternatively, auxiliary reasoning model 348 may be provided which is a fuzzy logic model, which may be advantageous in cases where the available information is imprecise. Chained output of the auxiliary reasoning models 344 -348 is provided to LLM 110 as context in the prompt to explain a root cause the identified anomaly.

After having identified a root cause of the anomaly, action engine 360 may initiate one of more responses with respect to the anomaly. For example, based on the root cause analysis, the action engine 360 may be configured to provide an alert on the identified root cause issue to an operator. A format of the alert may be adjusted based on a determined severity of the anomaly. The alert may, for example, be displayed on a graphical user interface of an administrator's computer.

Action engine 360 may provide root cause analysis report 349 on a display for inspection by a human operator who administrates the telecommunications network 160. Significantly, because the root cause analysis report 349 is generated by LLM 110, it contains an explanation of the anomaly in natural language which the operator can hence quickly understand. Conventional tools, in contrast, are focused on outputting numeric data which is more difficult to assess. The disclosed approach hence provides for excellent interpretability in detecting anomalies and their root causes. The operator can then proceed to investigate the anomaly by manually inspecting the conditions in the telecommunications network 160.

Additionally or alternatively, action engine 360 may be configured to select, based on the root cause issue, actions from a set of predefined actions to address the specific root cause issue. The selected actions may then be displayed on a graphical user interface of a computer. Alternatively, the system may automatically proceed with implementing the proposed actions on telecommunications network 160.

In other embodiments, processing block 362 is configured to prepare a prompt to be provided to LLM 110. Processing block 362 may configure the prompt to contain results of the root cause analysis, e.g. the root cause analysis report 349, and the severity of the anomaly as a context. Processing block 362 assembles the prompt to contain a task description for the LLM to propose and/or evaluate potential actions to resolve the anomaly. Because LLM 110 has been trained, specifically, on technical manuals 141, troubleshooting guides 142, and resolved support tickets 143, LLM 110 can be prompted to associate the anomaly to potential actions to resolve the anomaly. Troubleshooting guides contain a guideline on how to resolve various anomalies and resolved support tickets provide clear-cut templates of how to proceed in similar cases. The action engine 360 can hence automatically propose contextually relevant and coherent actions. For example, the LLM can be instructed to reproduce parts of manuals or troubleshooting guides which it assesses as relevant, so that the operator is provided with likely helpful information on how to resolve the anomaly. The proposed action generated by the LLM may be displayed to a human operator on a graphical user interface of a computer. Alternatively, the system may automatically proceed with implementing the proposed actions on the telecommunications network 160.

System 230 may further be configured to verify that the anomaly has actually been resolved. To verify that the anomaly has actually been resolved, the anomaly detection engine 320 may be employed to reevaluate presence of the anomaly based on most recent real-time data, i.e. a most recent time window of real-time data 211-214 and 231-233. By not detecting the anomaly again, it can be verified that the anomaly was resolved. If the anomaly is detected again, root cause analysis engine 340 may be fed with the action taken and the most recent time window of the real-time data 211-214 and 231-233 and may be prompted with a task description to determine why the anomaly persists. Additionally, the anomaly may be escalated by raising a higher-level alarm.

In the case that the anomaly has been resolved, the action taken can be added to the training data employed for a next round of training of LLM 110, so that the proposed system is adaptively refined. Accordingly, the capabilities of the large language model are continuously improved and adapted to evolving network threat landscapes.

During application of LLM 110 in the system 230, a temperature parameter of the LLM can be set to a low value, such as 0.1, to reduce the risk of hallucinations over the real-time data. Further, by employing an appropriate tier of the provider of the LLM, details of the data can be hidden to ensure data privacy. Alternatively, the LLM is run on the infrastructure of the telecom provider itself. By these measures, data privacy is safeguarded while minimizing security concerns and risks of data leakage. The proposed approach can provide immediate context of error solutions while also respecting data privacy and data security.

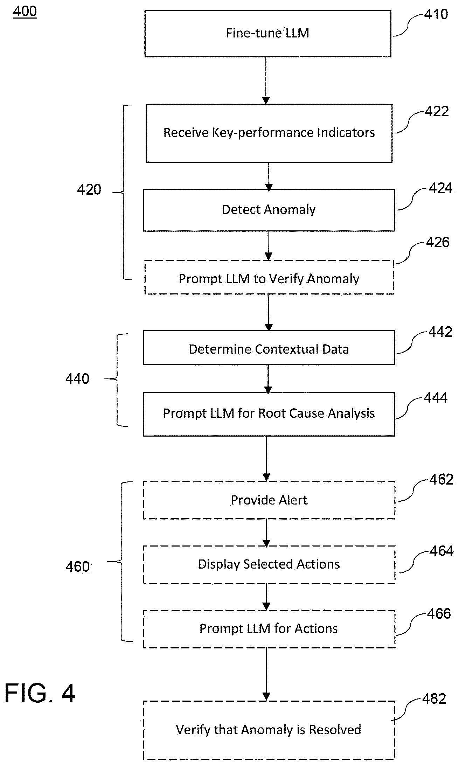

**Figure 4** illustrates a block diagram of a method 400 for managing a telecommunications network based on employing an LLM.

Method 400 includes step 410 of fine-tuning the LLM on training data from the telecommunications network to adapt the LLM to the specific task. The training data comprises technical documentation and historical data from a telecommunications network. The training data hence comprises information on the telecommunications network that would be accessible to a human operation. As explained above, the training data are drawn from manuals, troubleshooting guides, or ticket databases relating to troubleshooting of previous network problems. The training data may be preprocessed by data wrangling techniques in order to provide information as clean as possible to the LLM. In a last step, an API of the LLM may be employed for fine-tuning based on the processed training data.

Method 400 proceeds by steps 420 for monitoring real-time data of the telecommunications network 160 for anomalies with the help of the fine-tuned LLM. Monitoring real-time data may comprise step 422 of receiving key-performance indicators. Method 400 may then comprise step 424 of detecting an anomaly in the key-performance indicators by an anomaly detection algorithm. Optionally, the method may comprise step 426 of providing data on the detected anomaly and the key-performance indicators may be provided to the fine-tuned LLM within a prompt that instructs the LLM to determine whether or not the anomaly is verified. The employed prompt may be structured according to a first prompt template.

In response to detecting or, optionally, verifying the anomaly, method 400 proceeds with steps 440 for identifying a root cause of the anomaly. Steps 440 may comprise step 442 of extracting contextual data from the real-time data and step 444 of providing the contextual data to the LLM within a prompt to identify a root cause. The employed prompt may be structured according to a second prompt template. Step 442 of extracting the contextual data may also include performing analyses by auxiliary reasoning models as described above.

After determining the root cause, method 400 includes steps 460 for generating a response. Generating the response may include step 462 of providing an alert to an operator of the telecommunications network, step 464 of displaying a list of actions selected based on the root cause. Steps 460 may further include extracting actions from trained knowledge. In embodiments, steps 460 may also comprises feeding the LLM with a task description to assess, for each action in the predefined set of actions, a likelihood that the action resolves the identified root cause. An action with highest likelihood may then be proposed to a user.

In other embodiments, generating the response may include step 466 of prompting the LLM to propose responses to the identified anomaly. The employed prompt may be structured according to a third prompt template. The actions may include proposed configuration changes of network elements or may be based on providing different routing information to circumvent a failed hardware component. In a virtualized networking environment, the actions may include instantiating virtual machines to increase network capability along particular network routes.

After an action has been taken to resolve the anomaly, and after receiving updated real-time data from telecommunications network 160, the method my comprise step 482 of verifying that the anomaly has been resolved e.g. by prompting the anomaly detection engine to reevaluate presence of the anomaly. In case that it is verified that the anomaly is resolved, the log data on the interaction with the LLM may be added to the training data so that the next iteration of the LLM is refined based on the successfully resolved issues. Method 400 may hence comprise an adaptive learning mechanism to continuously improve language model capabilities, achieving an adaptation to ever evolving network threat landscapes. This constant training allows system 320 described above to constantly refine and enhance response generation.

In System 320 and method 400, the capabilities of LLMs are hence leveraged for real-time anomaly detection and root cause diagnosis in the telecommunications networks. The disclosure further proposes to employ the LLM to provide various strategies to resolve the anomaly. In view of the capabilities of LLMs, the disclosed approach can pay full consideration to the context of the anomaly, which sets the system apart from existing tools that are limited in this regard. Of particular significance is the superior capability of LLMs for zero-shot performance. In the today's complex telecommunication landscape, particular technical circumstances essential for recognizing a cause of an anomaly might not be contained in the training data at all, so that good zero-shot performance is necessary to conclude that the particular technical circumstances that was not observed before is actually responsible for the anomaly.

By offering a repeated interaction with the LLM, the disclosed systems and methods provide a continued human-machine interaction process for anomaly detection and resolution in telecommunications networks. In particular, because the LLM generates the analysis and recommendation for actions in natural language, the operator can quickly grasp the situation regarding the anomaly, assess the anomalous situation and decide whether actions proposed by the LLM are likely to actually resolve the anomaly.

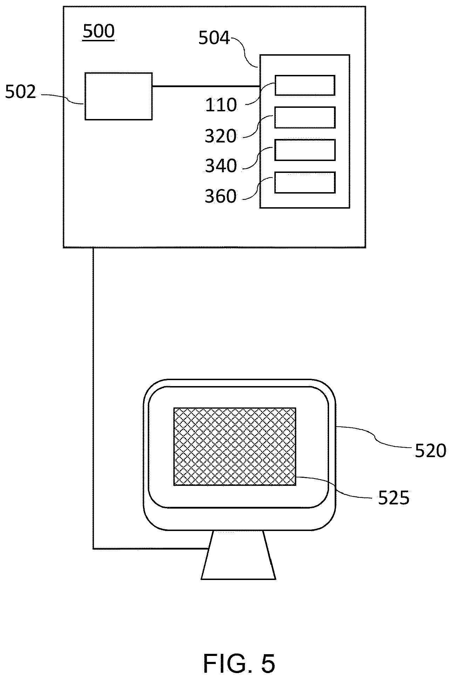

**Figure 5** shows a schematic drawing of a computing device 500 according to embodiments of the present invention. Computing device 500 may comprise memory 504, which may store LLM 110 and instructions for implementing anomaly detection engine 320, root cause analysis engine 340, and action engine 360. Computing device 500 may be associated with, connected to, or comprised in the telecommunications network 160. For example, computing device 500 be comprised in a serving node in the core network of the telecommunications network 160.

Computing device 500 further comprises CPU 502 configured for loading the fine-tuned LLM 110 from memory 506. Alternatively, CPU 502 is configured for accessing LLM 110 from a provider via the internet. CPU 502 may further be configured for performing the anomaly detection engine 420, root cause analysis engine 440, and action engine 460 in cooperation with LLM 110, as explained above.

A display 520 connected with the computing device 500 may render a graphical user interface 525. For example, the graphical user interface 525 may display an alarm 326 when the anomaly detection engine 320, being performed by CPU 502, has detected presence of an anomaly. Further, along with the alarm, the graphical user interface 525 may display the generated root cause analysis report 349, and/or potential responses as proposed by the action engine 360. Due to the superior language capability of the LLM, a user of the computing device 500 is enabled to assess the detected anomaly and the proposed responses.

The proposed system improves operation and maintenance of telecommunication networks by merging LLMs into automatic disruption reactions. By consistently integrating the LLM, the disclosed solution acquires a capability for real-time disruption mitigation. The disclosed dynamic approach can help to significantly minimize the impact of anomalies, accelerate network recovery, and elevate telecommunications network management practices to meet today's requirements for ubiquitous reliable communication.

## Claims

1. A computer-implemented method (400) for managing a telecommunications network (160), the method comprising:
monitoring (420) the telecommunications network (160), the monitoring (420) comprising:
receiving (422) one or more key-performance indicators, and
determining (424), by an anomaly detector, whether the one or more key-performance indicators indicate an anomaly;
in response to detecting an anomaly in the key-performance indicators:
determining (442), by a root cause analysis engine (340), contextual data associated with the real-time data (220),
feeding (444), by the root cause analysis engine (340), a prompt to identify a root cause to a large language model, the prompt to identify the root cause containing the contextual data and a task description for root cause analysis for the anomaly, the large language model (110) being fine-tuned with technical documentation (130) for the telecommunications network (160) and historical data (150) originating from the telecommunications network (160), and
performing (460), by an action engine (360), one or more responses to address the root cause.

2. The method of claim 1, wherein the technical documentation (140) comprises at least one of administration guides (141), troubleshooting guides (142), closed support tickets (143), configuration files (144).

3. The method of claim 1 or claim 2, wherein the historical data (150) comprise network manager change logs (151), historical log data (152), historical performance metrics (153), and baseline profiles (154).

4. The method of one of the preceding claims, wherein the real-time data (220) comprise at least one of real-time logs (211), event streams (212), telemetry data (213), infrastructure data (214), application metrics (215), social media (241), public data (242), and environmental data (243).

5. The method of one of the preceding claims, wherein the prompt to identify a root cause is a second prompt, wherein the task description for root cause analysis for the anomaly is a second task description, wherein the monitoring (420) the real-time data (220) further comprises feeding a first prompt to the large language model, the first prompt comprising textual output of the anomaly detector (324), the real time data (220), and a first task description to verify (426) the anomaly.

6. The method of one of the preceding claims, wherein the contextual data is based on the key-performance indicators, textual output of the anomaly detector (324), output generated by the large language model (110) in response to the prompt to identify a root cause, and current network configuration data of the telecommunications network (160).

7. The method of one of the preceding claims, wherein the performing the one or more responses by the action engine (460) comprises providing (462) an alert (346) on the identified root cause to a user.

8. The method of one of the preceding claims, wherein the performing the one or more responses by the action engine (360) comprises displaying (464), on a graphical user interface (525) of a computer (500), one or more actions to be performed on the telecommunications network (160).

9. The method of one of the preceding claims, wherein the performing the one or more responses by the action engine (360) comprises automatically initiating performing one or more actions on the telecommunications network (160), the one or more actions being selected based on the identified root cause.

10. The method of claim 8 or claim 9, further comprising generating the one or more actions by feeding (446) a third prompt to the large language model (110), the third prompt comprising a third task description to suggest actions to resolve the root cause.

11. The method of one of the preceding claims, wherein the determining the contextual data is based on auxiliary reasoning models (344, 346, 348).

12. The method of claim 11, wherein the auxiliary reasoning models (344, 346, 348) comprise at least one of a Bayesian reasoning model (344), a Markov chain model (346), and a fuzzy logic model (348).

13. The method of one of the preceding claims, further comprising feeding a fourth prompt to the large language model (110), the fourth prompt comprising a fourth task description to verify (482) that the detected anomaly has been resolved.

14. A computer-readable medium (504) comprising instructions that, when executed by a processing unit, cause the processing unit to perform the method of any one of claims 1 to 13.

15. A computing system (500) comprising:
a processing unit (502); and
a memory unit (504) connected to the processing unit (502), the memory unit (504) comprising instructions that, when executed by the processing unit (502), cause the processing unit (502) to perform the method of any one of claims 1 to 13.
